# EUROPEAN PATENT SPECIFICATION

(11) **EP 0 817 708 B1**
(45) Date of publication and mention of the grant of the patent: **13.12.2000**
(21) Application number: 96908430.0
(22) Date of filing: 26.03.1996
(51) Int. Cl.: B27M 3/04

(54) **METHOD OF PRODUCING A BUILDING ELEMENT DESTINED FOR THE MAKING OF A LAMINATED WOODEN FLOOR**
VERFAHREN ZUR HERSTELLUNG VON EINEM BAUELEMENT FÜR EINEN LAMINIERTEN HOLZBODEN
PROCEDE DE PRODUCTION D'UN ELEMENT DE CONSTRUCTION SERVANT A LA FABRICATION D'UN PLANCHER EN BOIS STRATIFIE

(30) Priority: 28.03.1995 SE 9501089
(43) Date of publication of application: 14.01.1998
(73) Proprietor: Tarkett AB, 289 89 Hanaskog (SE)
(72) Inventor: LINDER, Johnny, S-289 50 Hanaskog (SE)
(74) Representative: Andersson, Per-Olof
(86) International application number: SE9600377
(87) International publication number: WO9630177

(56) References cited:
- DE-C- 3 036 793
- FR-A- 2 077 902
- US-A- 5 109 898
- DERWENT'S ABSTRACT, No. E6220E/16, Week 8216; & SU,A,844 316 (ORGTEKHSTROI TRUST), 7 July 1981.

## Description

The present invention relates to a method of producing a building element, which consists of glued-together layers of wood and which is destined for the making of a laminated wooden floor, such as a parquet floor, in which method at least two layers of wood are placed one above the other with an intermediate layer of glue so as to form a base unit, which is compressed between two press plates extending in parallel with the layers of wood, an electromagnetic high-frequency alternating field being applied across the base unit in order to harden the glue in the layer of glue.

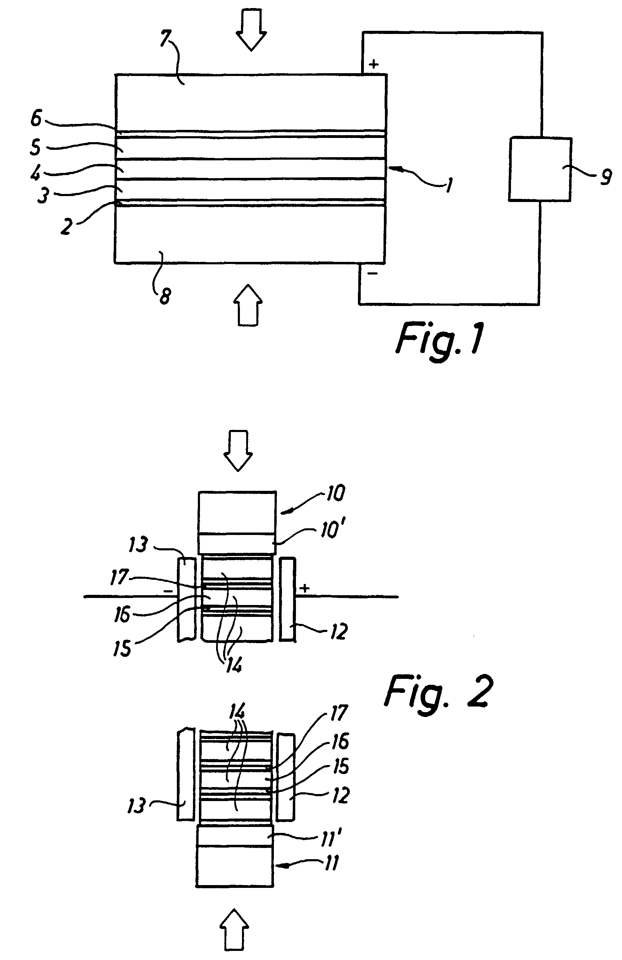

A known method of this kind will now be described in more detail with reference to Fig. 1, which schematically illustrates the known method.

A base unit in the form of a rectangular board 1, which is of a width of about 1 m and a length of about 2 m, is made up of five layers of wood 2-6 with intermediate layers of heat-hardenable glue. The board 1 consists of a lower, about 2-mm-thick bottom veneer layer 2, an about 10-mm-thick intermediate veneer layer 3 arranged thereon, an about 10-mm-thick intermediate layer 4 arranged on the layer 3 and consisting of a plurality of wood bars laid in a predetermined pattern, an about 10-mm-thick intermediate veneer layer 5 placed on the intermediate layer 4 and being of the same kind as the intermediate veneer layer 3, and an upper, about 2-mm-thick bottom veneer layer 6, which is of the same kind as the bottom veneer layer 2.

The board 1 is placed in a press between an upper press plate 7 and a lower press plate 8, between which it is compressed. During compression, an electromagnetic high-frequency (10-30 MHz) alternating field is applied across the board 1 to harden the glue in the glue layers. This high-frequency alternating field is applied by means of an oscillator system 9, which is connected to the two press plates 7 and 8 as shown in Fig. 1.

After hardening of the glue (after about 1 min), the board 1 is removed from the press to be divided into two boards by sawing in the centre of the intermediate layer 4. The divided layer 4 of each board should form an upper wearing coat of the wooden floor that is to be produced of the boards.

When the board 1 is removed from the press, it has a temperature of up to 100°C. However, the board 1 has an uneven temperature distribution and is warmest in its intermediate portion. The uneven temperature distribution results in an uneven moisture distribution in the board 1, which in turn causes unfavourable stress conditions in the board. Before the board 1 is divided and then used as building element, it must therefore be reconditioned under predetermined climatic conditions. Such reconditioning lasts 2-5 days.

The object of the present invention is to provide a method of producing a building element, the method being of the type described by way of introduction and permitting a reduction of the working time in the press and not requiring any subsequent reconditioning step.

The object is achieved by a method which is of the type described by way of introduction and characterised in that the electromagnetic high-frequency alternating field is applied across two electrode plates which are substantially perpendicular to the press plates and which, during the compression of the base unit, are placed on both sides of the base unit in the vicinity of two opposite side edges thereof.

The invention will now be described in more detail with reference to the accompanying drawing.

Fig. 1 illustrates schematically the above described known method.

Fig. 2 illustrates schematically the inventive method.

Fig. 2 shows a press, which comprises a horizontal upper press plate 10 and a horizontal lower press plate 11. The press also comprises two vertical plates 12 and 13 which are parallel with each other.

A plurality of board-shaped base units 14 being of a length of about 2 m and a width of about 20 cm, are made up of three layers of wood 15-17 with intermediate layers of heat-hardenable glue. Each base unit 14 consists of an about 2-mm-thick bottom veneer layer 15, an about 6-mm-thick intermediate veneer layer 16 arranged thereon, and an about 2-mm-thick upper layer 17 arranged on the intermediate veneer layer 16 and consisting of a plurality of wood bars laid in a predetermined pattern. The upper layer 17 should form an upper wearing coat of the wooden floor that is to be produced of building elements made of the base units 14.

A stack of 20-30 superposed base units 14 are placed in the press between the two press plates 10 and 11 and vertical plates 12 and 13 thereof to be compressed vertically. The stack is arranged in the press, such that the long sides of the board-shaped base units 14 included therein extend in parallel with the vertical plates 12 and 13. The vertical plates 12 and 13 are laterally displaceable to be able to be moved towards the stack and orient the base units 14 included therein in relation to each other and in relation to the press plates 10 and 11. During compression, the vertical plates 12 and 13 are held slightly spaced from the stack.

The vertical plates 12 and 13 constitute electrode plates and are connected to an oscillator system (not shown) in order to apply, during compression, an electromagnetic high-frequency (10-30 MHz) alternating field across the stack and, thus, cause hardening of the glue in the glue layers between the layers of wood 15-17 in each base unit 14.

The upper press plate 10 and the lower press plate 11 each consist of a metal plate, which on its underside and its upper side, respectively, supports a plastic plate 10', 11' preventing flashover between the vertical plates 12, 13 on the one hand and the respective press plates on the other hand.

By applying the electromagnetic high-frequency alternating field by means of the two vertical plates 12 and 13, it reaches all glue layers directly without first passing through one or more layers of wood. For this reason, the glue is hardened in a very short time (10-30 sec) and heated between the layers of wood 15-17 but to a small extent, which makes it unnecessary to perform any subsequent reconditioning of the building elements produced in the press.

## Claims

1. A method of producing a building element, which consists of glued-together layers of wood (15-17) and which is destined for the making of a laminated wooden floor, such as a parquet floor, in which method at least two layers of wood (15-17) are placed one above the other with an intermediate layer of glue so as to form a base unit (14), which is compressed between two press plates (10, 11) extending in parallel with the layers of wood, an electromagnetic high-frequency alternating field being applied across the base unit (14) in order to harden the glue in the layer of glue, **characterised** in that the electromagnetic high-frequency alternating field is applied across two electrode plates (12, 13) which are substantially perpendicular to the press plates (10, 11) and which, during the compression of the base unit (14), are placed on both sides of the base unit in the vicinity of two opposite side edges thereof.

2. The method as claimed in claim 1, **characterised** in that, before the compression of the base unit (14), the electrode plates (12, 13) are used to orient the layers of wood (15-17) relative to each other.

## Patentansprüche

1. Verfahren zur Herstellung eines aus Holzschichten (15-17), die miteinander verleimt sind, bestehenden Bauelements zur Herstellung eines laminierten Holzfussbodens, wie ein Parkettfussboden, bei welchem Verfahren zumindest zwei Holzschichten (15-17) auf einander gelegt werden mit einer dazwischen liegenden Leimschicht um ein Ausgangseinheit (14) zu schaffen, die zusammengepresst wird zwischen zwei mit den Holzschichten parallelen Pressenplatten (10, 11), wobei ein hochfrequentes, elektromagnetisches Wechselfeld über die Ausgangseinheit (14) gelegt wird um den Leim der Leimschicht auszuhärten, **dadurch gekennzeichnet**, dass das hochfrequente, elektromagnetische Wechselfeld über zwei zu den Pressenplatten (10, 11) im wesentlichen rechtwinkligen Elektrodenplatten (12, 13) gelegt wird, die beim Zusammenpressen der Ausgangseinheit (14) beidseitig der Ausgangseinheit in der Nähe von zwei gegenüberstehenden Seitenkanten dieser plaziert sind.

2. Verfahren gemäss Anspruch 1, **dadurch gekennzeichnet**, dass die Elektrodenplatten (12, 13) vor dem Zusammenpressen der Ausgangseinheit (14) ausgenützt werden zum Ausrichten der Holzschichten (15-17) zu einander.

## Revendications

1. Procédé de production d'un élément de construction, qui se compose de couches collées ensemble de bois (15 à 17) et qui est destiné à la réalisation d'un plancher en bois stratifié, tel qu'un parquet, dans lequel procédé au moins deux couches de bois (15 à 17) sont placées l'une au-dessus de l'autre avec une couche intermédiaire de colle de façon à former une unité de base (14), qui est comprimée entre deux plateaux de pression (10, 11) s'étendant parallèlement aux couches de bois, un champ alternatif à haute fréquence électromagnétique étant appliqué sur l'unité de base (14) afin de durcir la colle dans la couche de colle, caractérisé en ce que le champ alternatif à haute fréquence électromagnétique est appliqué sur deux plaques d'électrodes (12, 13) qui sont sensiblement perpendiculaires aux plateaux de pression (10, 11) et qui, pendant la compression de l'unité de base (14), sont placées des deux côtés de l'unité de base au voisinage des deux bords latéraux opposés de celle-ci.

2. Procédé selon la revendication 1, caractérisé en ce que, avant la compression de l'unité de base (14), les plaques d'électrodes (12, 13) sont utilisées afin d'orienter des couches de bois (15 à 17) l'une par rapport à l'autre.
